# EUROPEAN PATENT APPLICATION

(11) **EP 1 712 204 A2**
(43) Date of publication of application: **18.10.2006**
(21) Application number: 06007567.8
(22) Date of filing: 11.04.2006
(51) Int. Cl.: A61C 8/00

(54) **Intraosseous dental implant**

(30) Priority: 12.04.2005 IT TO20050241
(71) Applicant: C.I.R.G. S.r.l., 10129 Torino (IT)
(72) Inventor: Gatti, Claudio, 10129 Torino (IT)
(74) Representative: Lotti, Giorgio

(57) **Abstract**

Endosseous dental implant of the type involving a threaded pin ( 10 ) which is screwed into the bone cavity and is provided with a hole ( 17,18 ) applied to the part of the implant emerging from the bone, housing a proper device protruding from the dental prosthesis ( 30 ) in order to anchor the prosthesis to the threaded pin ( 10 ); onto the top part ( 16 ) of the threaded pin exceeding the bone a removable hemispheric cup ( 11 ) is applied so that when the threaded pin is in final position, the cup presses onto the surrounding gengiva ( 25 ); the cup being equipped with anchoring devices ( 12 ) which firmly connect it to the pin, yet allowing it to be unscrewed from the pin in order to be replaced by the dental prosthesis that will fit the place occupied by the cup in the gengiva around the threaded pin.

## Description

The object of the invention is an endosseous dental implant.

The dental implants actually used possess a threaded pin which is screwed into the bone structure.

Different types of abutments are connected to the pins, emerging through the gingival tissue to anchor the dental prosthesis.

The tecniques used to place dental implants are normally either single-stage or two-stage.

The two-stage technique implicates two distinct operative phases. In the first phase the threaded pin is screwed into the bone structure and will remain submerged under the gingival mucosa during the healing period.

The healing time is necessary to allow the "osseointegration" of the implant, which means that new alveolar bone forms around the threaded pin, hence giving the implant the necessary stability to stand against the load of the chewing forces.

Once the appropriate healing time is reached (some months), the top of the pin is exposed into the oral cavity through a proper flap raised in the gingival mucosa.

The top of the pin is then loaded with a specific abutment in order to anchor the dental prosthesis.

This technique requires the preliminary evaluation of several factors, among which many are to be found outside the oral cavity.

Modern implantology can indeed answer both aesthetic and functional demands of the patients, though this type of implants may often require additional preliminary surgery to reestablish a correct bone morphology and a proper bone volume as far as height and width.

Such techniques include the expansion of the atrophic edentulous crests with autologous bone grafts from intra or extra-oral donor sites, maxillary sinus lift, lifting of the nasalis fossae, repositioning of the inferior alveolar nerve.

The above mentioned techniques being rather invasive and complex, a very accurate planning is therefore needed.

Many patients, owing to the old age or to poor health conditions are in fact traditionally excluded from this type of treatment. Moreover, the patients must submit themselves to a long period of physical and psychological discomfort before the final result is reached.

The economical factor should not be forgotten as well: the high costs of complex and long lasting rehabilitation protocols automatically exclude a large part of the population.

The mean value of the life time having considerably increased, along with the offer of new surgical techniques by modern implantology, more and more patients claim a fixed prosthesis that must answer their functional and aesthetic demands.

Most of the problems connected with the two stage technique can be solved with a single stage technique: people with bone atrophy and/or poor health conditions and/or funding problems can as well receive a rehabilitation with a fixed prosthesis.

In the single stage technique the implant is placed in situ and the top of the pin is exposed in the oral cavity within the same surgical theatre.

This becomes possible because of the specific shape of the threaded pin, which provides sufficient immediate stability once placed in situ. It is therefore possible to assure the patient with the real chance to wear immediately after surgery a fixed provisional prosthesis, apt to chew the food and to perform normal social life.

The surgical steps are shorted, the post-operative discomfort is reduced.

The single stage surgery involves particular attention to the healing process of the mucosa around the abutment of the implant.

A proper healing time must be observed in order to reach a correct evaluation of the final position of the gengiva and its final shape around the implant.

The object of this invention is an endosseous dental implant designed to avoid the above mentioned disadvantages, namely a type of implant that can be used in a single stage as well as in a two-stage surgery.

For the reason up above described and for reasons that will be further on exposed, this invention proposes an endosseous dental implant made of a threaded pin to be screwed in the bone, provided with a hole machined in its terminal end exceeding the bone.

The dental prosthesis is anchored by an abutment (post) shaped to fit exactly the hole in the terminal end of the implant.

In the end of the endosseous implant, at intermediate height, a hemispheric cup is screwed. Within the healing time the hemispheric cup induces tissue contitioning of the surrounding soft tissue to match its shape.

It is then possible to remove the cup, to place, to screw, and cement the abutment and take the final impression.

On the abutment the same provisional resin prosthesis can be applied, after proper base remodeling, that had been applied previously on the conditioning hemispheric cup.

It is the cup shaped tissue conditioner that allows to maintain the shape of soft tissues around the implant until the final prosthesis is definitely cemented, and assures the perfect final results of the rehabilitation.

The shape and the dimensions of the implant, namely the ratio between the core of the pin and the coils in its endosseous part, are such that this implant can well be used as a single-stage implant and placed in situ with a direct transmucosal technique and loaded immediately.

Furthermore the dimensions, the design and the shape of the emerging abutment allow the synergic integration of this implant procedure with the endoral electrical welding by syncrystallisation of bars or other titanium components.

Once in situ, the shape and the vertical axis of the abutment can be modified in the oral cavity by high speed rotating instruments.

In some clinical cases the operator might decide to perform a two-stage surgery: the object of this invention can be used simply by removing the emerging abutment, and replacing it by a screw and a surgical tap, with the same procedure observed for a two-stage surgery.

The tissue conditioning can be performed as up above described.

It is of basic importance for the success of the surgery and the safety of the implant that the operator uses drills matching the shape of the implant but at least 2mm. shorter than the implant, and manual tapping drills to gain the gap of 2mm. without damaging the surrounding sensible tissues.

Just as important is the overall shape of the tissue conditioning hemispheric cup, namely in its base emerging from the implant, in order to allow a precise impression of the implant outline and the perfect connection between the implant and the prosthesis.

The implant can be supplied with cone-shaped coils as well as cylinder-shaped coils.

The object of the invention will now be evidentiated according to the following figures :

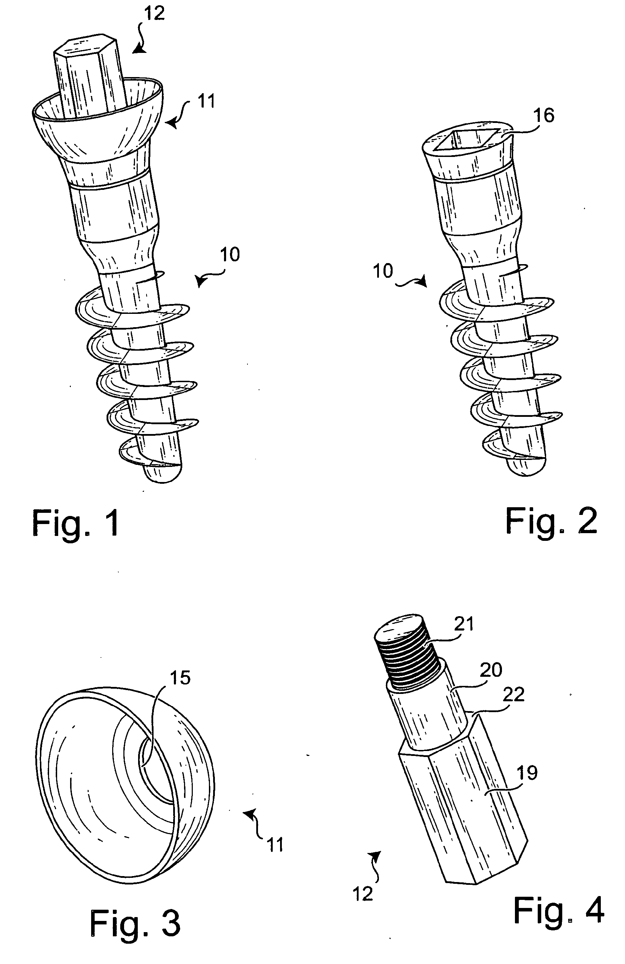

figure 1 shows the overall view of the object of the invention;
figures 2,3 and 4 show the three specific components that once assembled create the object of the invention as shown in fig.1;
figure 5 is the axial section of the threaded pin; figures 6,7 show two operative phases of the implant device according to the invention.

According to the invention the device is made of three parts which must be assembled together: a threaded pin 10, a hemispheric cup 11, and a locking screw 12.

The threaded pin 10 is to be screwed into the bone.

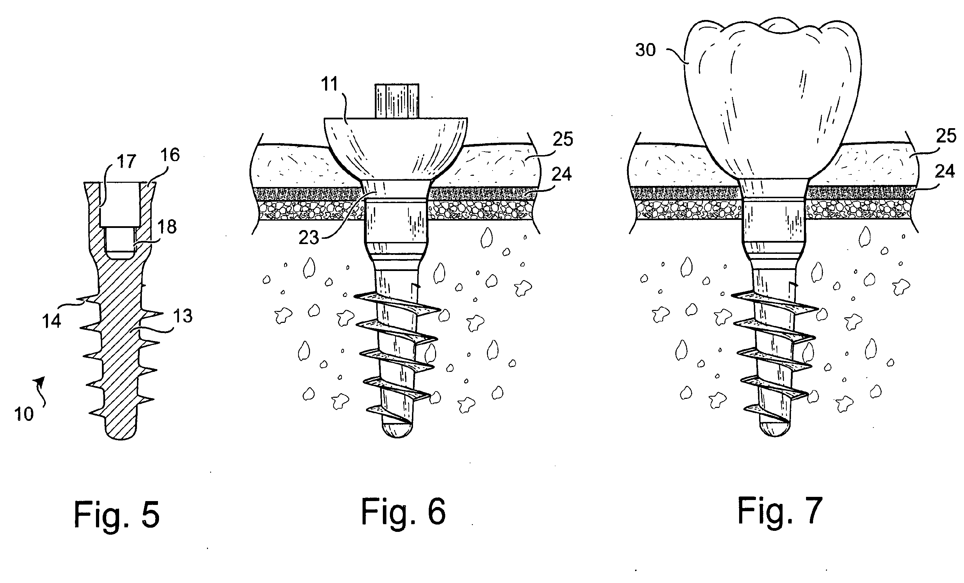

It must be noted in fig.5 the advantage represented by the section of the pin, which decreases as it reaches its apex towards the inner bone structure, both in the core body 13, and in the coil section 14, the coil section keeping a relevant dimension compared to the core body 13.

Such features allow the threaded pin 10 to be immediately stable against torsional and flexing movements exerted on the pins by chewing loads, so the threaded pin 10 can be used in single-stage surgery as well as in the two-stage surgery.

Connected to the pin 10 there is a hemispheric cup 11 with a hole 15, which in operative situation lies with the walls of the hole 15 on the top face 16 of the pin 10.

From the face 16 of the pin 10 a hole extends internally with a first part of square section 17 and a second part of threaded cylinder-type section 18.

The locking screw 12 shows a first part 19 of hexagonal shape, which is to stay externally to the pin 10, a second part of cylinder-type section, which is intermediate and must fit into the hole 17 of the pin 10, and a third part 21 also of cylinder-type section, though with a smaller diameter than part 20, which is to be screwed in the threaded part 18 of the hole in the pin 10.

The cup 11 is kept pinched in position between the surface 16 of the pin and the surface 22, between the parts 19 and 20 of the locking screw 12.

Once the tooth is extracted, the pin 10 is screwed in the bone cavity, as shown in figure 6, so that its top part 23, slightly countersinked, fits into the hole left open in the gengival tissue by the extracted tooth.

The cup 11 will instead fit the hole in the gengiva 25. The gengiva 25 lying under the cup 11 will match the external shape of this last; therefore once the cup 11 will be removed after the locking screw 12 has been unscrewed, the gengiva 25 around the pin 10 will keep a hemispheric shape.

At this stage the prosthesis 30 can be inserted (see fig. 7), and it will be provided with a threaded post (figure not reported) that is to be screwed in the hole 18 of the pin 10.

The gengiva 25 will naturally adapt to the external sides of the prosthesis, regaining the natural look the site showed before the extraction of the tooth, with the gengiva 25 assuring a totally aesthetic final result and perfectly accurate oral hygiene.

It is evident how the use of the cup 11 makes it possible to follow a two-stage surgical technique even if the pin 10 is immediately stable right after it is inserted into the bone.

## Claims

1. Endosseous dental implant of the type involving a threaded pin ( 10 ) which is screwed into the bone and is provided with a hole ( 17,18 ) applied to the part of the implant emerging from the bone, such a part being supplied with a proper device protruding from the dental prosthesis ( 30 ) in order to anchor the prosthesis to the threaded pin ( 10 ); this device being shaped so that to the top part ( 16 ) of the threaded pin exceeding the bone, a removable hemispheric cup ( 11 ) is applied , so that when the threaded pin is in final position within the bone, the cup presses onto the surrounding gengiva ( 25 ) ; the cup being equipped with anchoring devices which firmly connect it to the pin, yet allowing it to be unscrewed from this last and to be replaced with the dental prosthesis that will fit exactely the place previously occupied by the cup in the gengiva around the threaded pin.

2. Endosseous dental implant according to claim 1, in which the threaded pin ( 10 ) has a section progressively decreasing in diameter towards its endosseous apex, both in its central core ( 13 ) and in its coil-type part ( 14 ), yet this last with sizes which are always relevant to the central core ( 13 ).

3. Endosseous dental implant according to claim 1, in which the cup ( 11 ) has a hole ( 15 ) with sides that under operative phase are laying onto the top face ( 16 ) of the pin ( 10 ) .

4. Endosseous dental implant according to claims 1 and 3 , in which from the face ( 16 ) of the pin ( 10 ) a hole extends internally to the pin whereby the first part of the hole has a square section ( 17 ) and the second part has a cylinder-type threaded section ( 18 ).

5. Endosseous dental implant according to claims 1 and 4, in which the devices anchoring tightly the cup ( 11 ) to the pin ( 10 ) include : a locking screw (12 ) made of a first part ( 19 ) shaped as a hexagon that is to stay externally to the pin ( 10 ), a second part with a cylinder-type section which is intermediate and must fit into the first part ( 17 ) of the hole in the pin ( 10 ), a third part ( 21 ) with a cylinder-type section having a smaller diameter than the second part (20 ), that is to be screwed in the threaded part (18) of the hole in the pin ( 10 ); the cup ( 11 ) being pinched in place between the surface ( 16 ) of the pin and the surface ( 22 ) between the parts ( 19 ) and ( 20 ) of the locking screw ( 12 ).
